# EUROPEAN PATENT APPLICATION

(11) **EP 2 837 439 A2**
(43) Date of publication of application: **18.02.2015**
(21) Application number: 14177279.8
(22) Date of filing: 16.07.2014
(51) Int. Cl.: B21D 22/00

(54) **A method of reducing wrinkles in pressed sheet metal components**

(30) Priority: 16.08.2013 GB 201314670
(71) Applicant: Rolls-Royce plc, London SW1E 6AT (GB)
(72) Inventor: Cooper, Joseph, Bristol, South Gloucestershire BS32 8DS (GB); Hayton, Paul, Bristol, South Gloucestershire BS35 4BT (GB); Rowlands-Conway, Joe, Cirencester, Gloucestershire GL7 1SR (GB)
(74) Representative: Yeomans, Victoria Jane Anora

(57) **Abstract**

A method of forming a sheet metal component comprises the steps of initially forming a profiled blank from a metal sheet and then identifying on a surface of the blank, one or more wrinkle lines across which a buckling stress exceeds a critical buckling stress limit.

Then at least one slot is cut into in the profiled blank, with the or each slot extending entirely through a thickness of the profiled blank and being coincident with one of the wrinkle lines, and a hole is cut at one end of the slot with the hole having a diameter greater than a lateral width of the slot.

The profiled blank is then processed in a pressing operation to form a shaped blank with one or more welding operations being carried out on the shaped blank along each slot to produce a finished sheet metal component.

## Description

### Field of the Invention

The present invention relates to a method of reducing wrinkles in pressed sheet metal components and particularly, but not exclusively, to a method of reducing wrinkles in thin walled sheet metal pressings.

### Background to the Invention

It is well known to cut slots and cut-outs in two dimensional metal sheets prior to forming these flat sheets into three dimensional formed components. Such slots and cut-outs are typically produced using laser cutting techniques which can provide net shape blanks. These blanks can then be bent to shape and welded together very cheaply and easily.

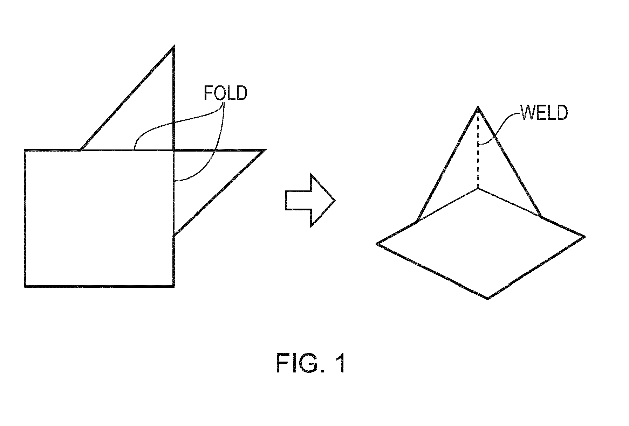

For simple shapes, these slots and cut-outs are generally cut into the external peripheral edge(s) of the blank, as shown in Figure 1, thereby requiring at least one bend to close the cut edges together.

For more complex formed surface geometries it is known to further process the blank by pressing and drawing or stretching.

A known difficulty with such forming methods is that they do not permit stretching and forming of complex three-dimensional geometries on pressed components using simple tooling. This generally results in formed components having excess material thereby causing wrinkles in the sheet material's surfaces.

One solution to this problem is to form the shaped component at high temperature (close to the material's melting point) and under high pressure. However this requires specialised tooling and is expensive and difficult to control.

### Statements of Invention

According to a first aspect of the present invention there is provided a method of forming a sheet metal component, the method comprising the steps of:
(i) forming a profiled blank from a metal sheet;
(ii) identifying on a surface of the blank, one or more wrinkle lines across which a buckling stress exceeds a critical buckling stress limit;
(iii) cutting at least one slot in the profiled blank, the or each slot extending entirely through a thickness of the profiled blank, the or each slot being coincident with a respective one of the or each wrinkle lines;
(iv) processing the profiled blank in a pressing operation to form a shaped blank; and
(v) performing one or more welding operations on the shaped blank along the or each slot to thereby produce a finished sheet metal component.

The method of the invention provides for a method of forming sheet metal to create complicated compound curves without the need for the sheet metal to be pressed sufficiently to change the material thickness. This means that the pressing operation(s) can be carried out at lower temperatures and pressures thereby making the method of the invention cheaper and easier for a user.

A further advantage of the method of the invention is that it enables the forming process to be completed using only a single pressing operation and a single stage press capability. This means that the required tooling is simple and inexpensive in comparison to traditional multi-stage press tooling which requires a press that applies pressure from two or more directions.

A further benefit of the method of the invention is that the finished sheet metal component incurs reduced surface deformation which in turn provides a more accurate surface profile without the need for costly and time-consuming reworking.

Optionally, step (iii) comprises the additional step of cutting a hole at one end of the slot, the hole having a diameter greater than a lateral width of the slot.

The addition of a hole at the end of the slot reduces the stress concentration in the material in the region of the end of the slot. This in turn reduces the possibility of a crack initiating from one end of the slot during the pressing operation(s).

Optionally, step (iii) comprises the additional step of:
(iii)' cutting a hole at each end of the slot, each hole having a diameter greater than a lateral width of the slot.

The use of a hole having a larger diameter than the width of the slot can simplify the step of welding up the slot after the pressing operation(s) have been performed on the blank.

Optionally, the or each slot has a constant lateral width along the length of the slot.

Where the finished sheet metal component has pressed features that are formed symmetrically about an axis along the component, it may be advantageous to form slots of constant lateral width along corresponding wrinkle lines.

Optionally, the or each slot has a lateral width that tapers in a direction extending from a first end of the slot towards an opposite second end of the slot.

Where the finished sheet metal component has pressed features that are formed asymmetrically about an axis along the component, it may be advantageous to form slots having a tapered width along corresponding wrinkle lines.

Optionally, step (v) comprises the step of:
(v)' performing one or more welding operations on the shaped blank along the entire length of the or each slot to thereby produce a finished sheet metal component.

In one arrangement the welding operation(s) are performed over the entire length of the slot. This provides for maximum structural integrity in the finished component. However, depending upon the length of the slot, it may be necessary to heat treat the finished component to ameliorate any adverse stress concentration resulting from the heat input from the welding process(es).

In an alternative arrangement the welding operation(s) are carried out over only part or parts of the length of the slot. This may enable the part to be used without a need for further heat treatment thus reducing costs and making the method quicker. However the partial welding of the slot may reduce the structural strength of the component.

Other aspects of the invention provide devices, methods and systems which include and/or implement some or all of the actions described herein. The illustrative aspects of the invention are designed to solve one or more of the problems herein described and/or one or more other problems not discussed.

### Brief Description of the Drawings

There now follows a description of an embodiment of the invention, by way of nonlimiting example, with reference being made to the accompanying drawings in which:
Figure 1 shows schematic views of the blank and formed profile of a formed sheet metal component according to the prior art;
Figure 2 shows a perspective view of a sheet metal blank suitable for forming into a formed sheet metal component according to the method of the invention;
Figure 3 shows a perspective view of a finished sheet metal component formed from the blank of Figure 2 by the method of the invention;
Figure 4 shows an alternative embodiment of the blank of Figure 2; and
Figure 5 shows the blank of Figure 4 after being formed by the method of the invention.

It is noted that the drawings may not be to scale. The drawings are intended to depict only typical aspects of the invention, and therefore should not be considered as limiting the scope of the invention. In the drawings, like numbering represents like elements between the drawings.

### Detailed Description

Some metals are easier to mechanically work than others particularly with regard to making complex curvatures. An example of this is Inconel™ 718. Inconel™ 718 requires very high pressures to plastically deform in a cold or low temperature mould. When being worked and formed in sheet metal where there is a requirement for an area to be compressed this presents a problem.

Where there is insufficient pressure to compress the thickness of the Inconel™ the sheet material may buckle or wrinkle. These wrinkles are caused through excess material being squeezed and pushing away from the mould wall.

The method of the invention provides a means of removing material so that the component can be formed more easily.

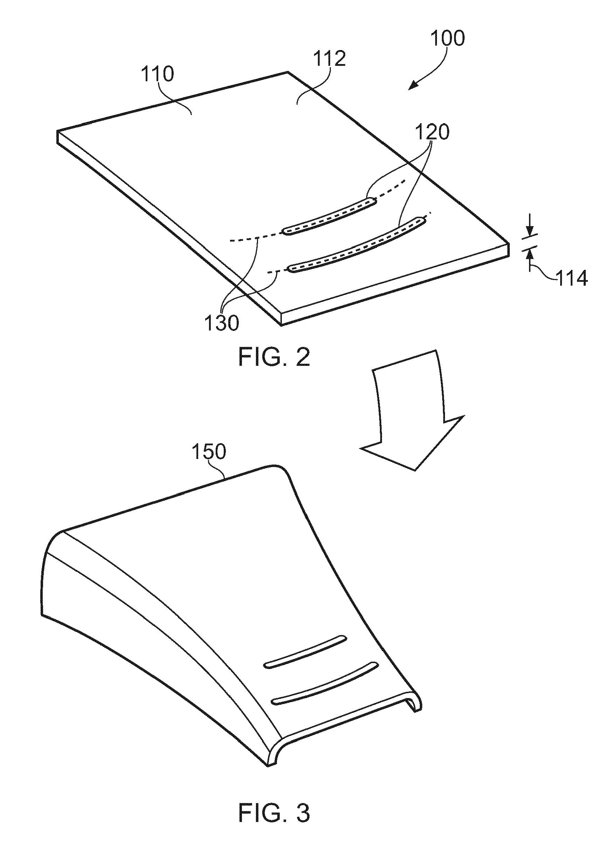

Figures 2 and 3 show an unformed sheet metal blank and a finished sheet metal component that has been processed by the method of the invention.

The profiled sheet metal blank 110 has a surface 112 and a thickness 114. In the examples shown in the figures, the sheet metal is an Inconel™ 718 alloy. However, the method of the invention is equally applicable to other high strength age-hardening metal alloys. A typical limiting material composition for Inconel™ 718 is set out below in Table 1.

**Table 1. - Inconel™ 718 Material Composition**

| Element | %age |
|---|---|
| Nickel (plus Cobalt) | 50.00 - 55.00 |
| Chromium | 17.00- - 21.00 |
| Iron | Balance |
| Niobium (plus Tantalum) | 4.75 - 5.50 |
| Molybdenum | 2.80 - 3.30 |
| Titanium | 065 - 1.15 |
| Aluminium | 0.20 - 0.80 |
| Cobalt | 1.00 max |
| Carbon | 0.08 max |
| Manganese | 0.35 max |
| Silicon | 0.35 max |
| Phosphorus | 0.015 max |
| Sulphur | 0.015 max |
| Boron | 0.006 max |
| Copper | 0.30 max |

The geometry of the finished sheet metal component 150 is analysed by means of suitable computer software, such as finite element analysis, to determine whether a compressive stress in the sheet material at any point in the forming process exceeds a critical buckling stress value for the material.

If any such compressive buckling stresses are identified they can be plotted on the surface 112 of the profiled blank 110. These buckling stresses enable prediction of the formation of wrinkles in the surface of the material. This type of analysis is well known in the metal forming industry and is commonly used to predict the onset of wrinkling in, for example, deep drawn metal pressings.

As described above, the lines 130 along which the wrinkles are predicted to form are lines along which the Inconel™ material would need to be compressed at very high pressure if the formation wrinkles is to be avoided.

The key step to the method of the invention is the cutting of one or more slots 120 through the surface 112 of the profiled blank 110 to thereby reduce the volume of material that is to be squeezed into the mould cavity. These slots 120 are aligned with the predicted wrinkle lines 130.

In one arrangement, the slot 120 is cut through the thickness 114 of the profiled blank 110 by a laser cutting process. In other arrangements another suitable cutting technique may be used to form the slot 120.

The geometry, direction and length of the slot 120 will be determined by the wrinkle line 130 which in turn has been predicted from the computer analysis of the forming operation.

Alternatively, the geometry of the wrinkle line(s) 130 may be determined by producing a test forming of the finished sheet metal component 150 and using the location of the wrinkle line(s) 130 that are formed as a guide to the location of the slot(s) on a further profiled blank 110. In other words a trial press process is used to determine the location of the wrinkle line(s).

Once the slot(s) have been cut into the profiled blank 110 and the pressing operation completed, the resulting material deformation causes the slot(s) 120 to close up, as shown in Figure 3. Any residual gap along the slot 130 must be small enough in the formed condition that the areas were once slots 130 can now be welded closed and dressed back to the surface profile.

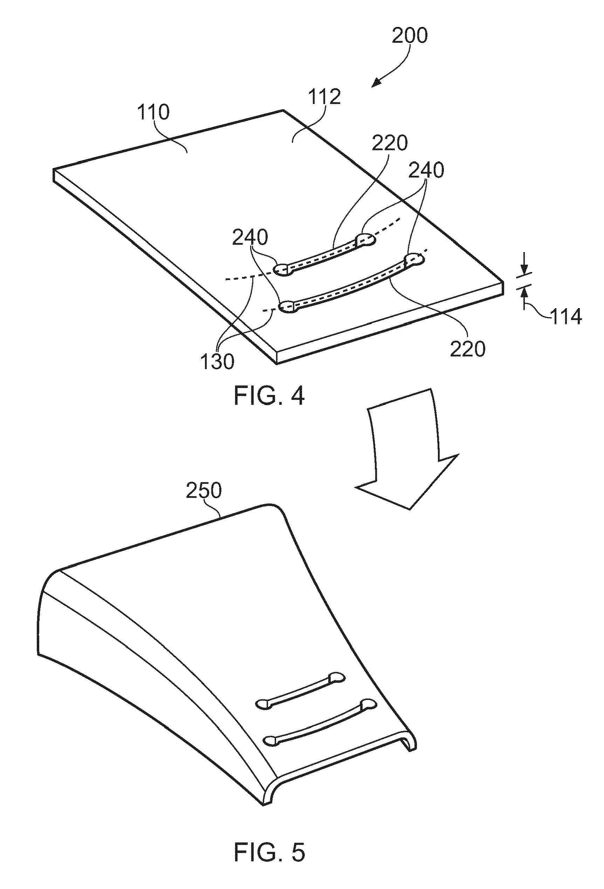

In an alternative arrangement, as shown in Figures 4 and 5, once the slot(s) 220 are formed along the wrinkle line(s) 130, a hole 240 is cut through the thickness 114 of the profiled blank 110 at each end of the slot 130.

The profiled blank 110 now with slots 220 having a hole 240 at each end is press formed in the same manner as described above to form a finished sheet metal component 250 in which the slots 220 have closed up along their length.

The slots 220 can then be welded up along their length with the holes 240 acting as aids to the start and end of the weld runs.

The foregoing description of various aspects of the invention has been presented for purposes of illustration and description. It is not intended to be exhaustive or to limit the invention to the precise form disclosed, and obviously, many modifications and variations are possible. Such modifications and variations that may be apparent to a person of skill in the art are included within the scope of the invention as defined by the accompanying claims.

## Claims

1. A method of forming a sheet metal component, the method comprising the steps of:
(i) forming a profiled blank (110) from a metal sheet;
(ii) identifying on a surface (112) of the blank (110), one or more wrinkle lines (130) across which a buckling stress exceeds a critical buckling stress limit;
(iii) cutting at least one slot (120;220) in the profiled blank (110), the or each slot (120;220) extending entirely through a thickness (114) of the profiled blank (110), the or each slot (120;220) being coincident with a respective one of the or each wrinkle lines (130);
(iv) processing the profiled blank (110) in a pressing operation to form a shaped blank; and
(v) performing one or more welding operations on the shaped blank along the or each slot (120;220) to thereby produce a finished sheet metal component (150;250).

2. The method as claimed in Claim 1, wherein step (iii) comprises the additional step of cutting a hole (240) at one end of the slot (220), the hole (240) having a diameter greater than a lateral width of the slot (220).

3. The method as claimed in Claim 1, wherein step (iii) comprises the additional step of:
(iii)' cutting a hole (240) at each end of the slot (220), each hole (240) having a diameter greater than a lateral width of the slot (220).

4. The method as claimed in any one of Claims 1 to 3, wherein the or each slot (120;220) has a constant lateral width along the length of the slot (120;220).

5. The method as claimed in any one of Claims 1 to 3, wherein the or each slot (120;220) has a lateral width that tapers in a direction extending from a first end of the slot (120;220) towards an opposite second end of the slot (120;220).

6. The method as claimed in any one of Claims 1 to 5, wherein step (v) comprises the step of:
(v)' performing one or more welding operations on the shaped blank along the entire length of the or each slot (120;220) to thereby produce a finished sheet metal component (150;250).
